# EUROPEAN PATENT APPLICATION

(11) **EP 1 734 100 A1**
(43) Date of publication of application: **20.12.2006**
(21) Application number: 04719904.7
(22) Date of filing: 12.03.2004
(51) Int. Cl.: C10L 3/12, F23K 5/22

(54) **A LIGHT HYDROCARBON FUEL, THE METHOD AND APPARATUS FOR ITS GASIFICATION**

(71) Applicant: Zhang, Qitai, Shanghai 201100 (CN)
(72) Inventor: Zhang, Qitai, Shanghai 201100 (CN)
(74) Representative: Bublak, Wolfgang
(86) International application number: PCT/CN2004/000194
(87) International publication number: WO 2005/087905

(57) **Abstract**

The present invention relates to a light hydrocarbon fuel, its gasifying method and device. The light hydrocarbon fuel contains: 1000pts.(wt.) C5-C6 light hydrocarbon, 0.5-1pts. (wt.) polyatomic alcohol, 1-5pts. (wt.) water-soluble alkali metal or alkaline-earth metals hydrochlorate, 10-20pts. (wt.) water, and alkali metal oxy-acid salt oxidant. It is easily to gasify the light hydrocarbon fuel of the present invention. Just letting in or drawing out the gas from a device, a combustible gas can be produced. This kind of combustible gas can be used to heat boiler or tunnel furnace and can also be used as a fuel of combustion engine.

## Description

### Field of the Invention

The present invention relates to a light hydrocarbon fuel, its gasifying method and device. More specifically, the present invention relates to light hydrocarbon fuel containing gas condensate, light naphtha or petroleum ether, its gasifying method and device.

### Background of the Invention

As the economy develops and people's living standard are increasingly improved, people's demand for energy is becoming greater. However, the reserves of petroleum and coal, which are major energy source at present in the world, are becoming increasingly limited, resulting in energy shortage.

At present there is a large amount of light hydrocarbons, including gas condensate, light naphtha and petroleum ether created during extraction of petroleum and gas and during the refining of petroleum. If this energy source is exploited and utilized comprehensively as domestic fuel, it will not only create favorable economic benefit but also be of great significance in the change of energy structure, resource conservation, and reduction of environmental pollution.

However, light hydrocarbon (e.g., gas condensate, light naphtha, and petroleum ether, etc.) is in liquid state under normal pressure and therefore can't be gasified easily as liquefied gas. Though a method of producing stable fuel gas by adding some water in light hydrocarbon fuel and then aerating is disclosed in Chinese patent application CN1213692A, the method delivers low gas production rate and can only be used in small household fuel gas devices, such as gas burners and gas-fired water heaters, but can't be used in large-size fuel gas devices, such as boilers or tunnel furnaces.

Still further, people have been trying to convert light hydrocarbon (e.g., gas condensate, light naphtha, and petroleum ether, etc.) into automotive fuel for automotive engines for many years without any luck. However, due to the fact that the light hydrocarbon has a low octane value and can't be gasified stably, it provides a result in poor starting performance, severe detonation, severely degraded power, and increased mechanical wear of engines.

### Summary of the Invention

To solve the above problem in the prior art and effectively utilize light hydrocarbon fuel, through hard investigation, the inventor provides a light hydrocarbon fuel, containing 1000 pts.(wt.) C₅-C₆ light hydrocarbon, 0.2-1 pts.(wt.) polyatomic alcohol, 1-5 pts.(wt.) water-soluble alkali metal or alkaline-earth metals hydrochlorate, 10-20 pts.(wt.) water, and 0.01-0.02 pts.(wt.) alkaline metals oxy-acid salt oxidant.

The present invention also provides a gasifying method for light hydrocarbon fuel, comprising the following steps: a) loading the foresaid light hydrocarbon fuel into a light hydrocarbon gasifying device, which comprises a container, an air intake pipe mounted on the container casing, and a combustible gas outlet; b) aerating at 5-8KPa air intake gauge pressure and outputting combustible gas from the combustible gas outlet; or c) connecting an one-way inlet valve to the air inlet, and then pumping combustible gas (containing 15-35% (vol.) hydrocarbon and 65-85% (vol.) air) continuously from the combustible gas outlet on said light hydrocarbon gasifying device.

The present invention also provides a light hydrocarbon fuel gasifying device, comprising a container and a combustible gas outlet and an air inlet pipe mounted on the container casing; wherein, said air inlet pipe is close to the liquid level of light hydrocarbon.

### Brief Description of the Drawings

Fig.1 shows the light hydrocarbon fuel gasifying device by pressurized aerating of the present invention.
Fig.2 shows the light hydrocarbon fuel gasifying device pumping combustible gas from the light hydrocarbon fuel container in the present invention

### Detailed Description of the Embodiments

Hereunder the present invention is described in detail.

The light hydrocarbon fuel described in the present invention contains 1000 pts.(wt.) C₅-C₆ light hydrocarbon, 0.2-1 pts.(wt.) polyatomic alcohol, 1-5 pts.(wt.) water-soluble alkali metal or alkaline-earth metals hydrochlorate, 10-20 pts.(wt.) water, and 0.01-0.02 pts.(wt.) alkaline metals oxy-acid salt oxidant.

The light hydrocarbon contained in the light hydrocarbon fuel in the invention is widely available, such as gas condensate produced in natural gas purification, primary top oil, petroleum ether, C₅ fraction, light naphtha and heavy naphtha, and 6# solvent, etc.

The major constituent of above light hydrocarbon is a mixture of C⁵-C⁶ alkane, including as normal pentane, isopentane, neopentane, cyclopentane, normal hexane, isohexane, neohexane, and cyclohexane. The specific gravity D²⁰₄ is 0.6-0.7kg/l; the boiling point is 30-80°C. Above light hydrocarbon also contains some C₇-C₉ alkane.

The polyatomic alcohol contained in the light hydrocarbon fuel in the invention refers to C₂-C₃ polyatomic alcohol, such as ethylene glycol, propylene glycol, glyceryl alcohol, or a mixture of them, preferably glyceryl alcohol.

The water-soluble alkali metal or alkaline-earth metals hydrochlorate contained in the light hydrocarbon fuel in the invention is sodium chloride, potassium chloride, magnesium chloride, calcium chloride, barium chloride, or a mixture of them, preferably barium chloride or salt brine.

The alkaline metals oxy-acid salt oxidant contained in the light hydrocarbon fuel in the invention is alkali metal permanganate, alkali metal dichromate, alkali metal perchlorate, or alkali metal periodate, preferably alkali metal permanganate, particularly potassium permanganate.

The preparation method of said light hydrocarbon fuel in the invention is very simple. Add 0.2-1 pts.(wt.) polyatomic alcohol, 1-5 pts.(wt.) water-soluble alkali metal or alkaline-earth metals hydrochlorate, and 0.01-0.02 pts.(wt.) alkali metals oxy-acid salt oxidant into 10-20 pts.(wt.) water, agitate to homogeneous and dissolve the component, and then add the obtained mixture into 1000 pts.(wt.) C₅-C₆ and agitate to homogeneous, to obtain the homogeneous light hydrocarbon fuel described in the invention.

The light hydrocarbon fuel described in the invention is easy to gasify. Stable combustible gas can be produced simply by blowing air over the liquid level of the light hydrocarbon fuel. Combustible gas has a high heat value, usually 15,000-20,000 kcal/m³. The obtained combustible gas can not only be used for heating large and medium-size boilers and tunnel furnaces but also be used to drive combustion engines.

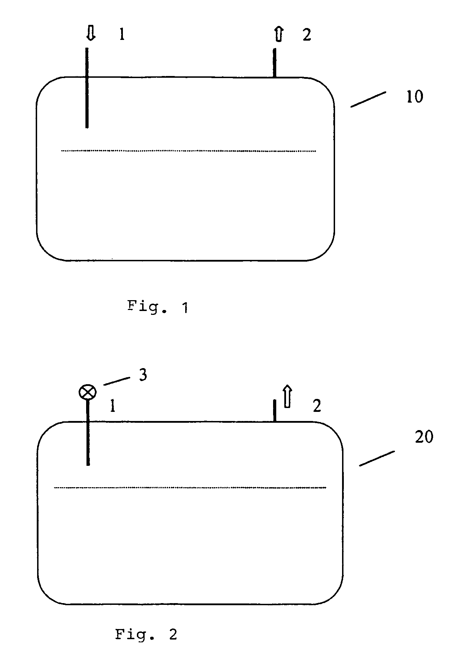

A light hydrocarbon fuel gasifying device described in the invention is shown in Fig.1. The light hydrocarbon fuel is added into a fuel container 10. The fuel container can be spherical, cylindrical, cuboidal, rectangular or cubical, in upright or horizontal form. For a large-size gasifying device, a cylindrical tank is preferred. The cylindrical tank is in 0.5-3m diameter (preferably 1-2m) and 1-5m length (preferably 2-3m).

Two holes are opened on upper part of said container; wherein, an air inlet pipe 1 is inserted into one hole and close to the liquid level of said light hydrocarbon fuel, preferably 5-10cm to the liquid level. The other hole is used as the outlet 2 of combustible gas. The two holes are sized as required, depending on the size of the gasifying device; usually, they are in 2-10cm diameter, preferably 3-5cm.

In order to effectively gasify the light hydrocarbon fuel described in the invention, the liquor level of light hydrocarbon fuel in the container is controlled at 1/3-2/3 of container height, preferably 1/2-2/3. The foresaid liquid level can be controlled by controlling the liquid flow between the container and the oil tank (not shown) with a ball valve (not shown).

Combustible gas containing 15-35% (vol.) light hydrocarbon and 65-85% (vol.) air can be produced at the combustible gas outlet by aerating to the light hydrocarbon fuel gasifying device shown in Fig.1 through the air inlet pipe 1 under micro-pressure. The gauge pressure of aerating is 2-8KPa, preferably 5-8KPa. The aerating flow rate depends on the area of liquid level in the gasifying device, usually 0.5-1.2m³/m²·min. The air should have high relative humidity, usually 60-80%.

During gasification, the temperature of the light hydrocarbon fuel described in the invention should not be lower than 6°C, preferably not lower than 12°C, optimally 12-18°C. If the temperature of the light hydrocarbon fuel is lower than 6°C, the light hydrocarbon fuel should be heated. It can be heated with water jacket, oil jacket, steam jacket, thermocouple heating rod, or coiled pipe, etc.

The combustible gas produced with the gasifying device shown in Fig.1 can be used in household burners, such as gas burners and gas-fired water heaters, or large-size boilers (e.g., 1-8T boilers) and tunnel furnaces (4MK/H). It is especially suitable for locations requiring a large quantity of clean and safe energy, such as hotels, restaurants, food product factories, enamel factories, and glassware factories, etc. It is also suitable for central heating for remote regions.

The light hydrocarbon fuel described in the invention features with simple production process, safe use, air gasification, high combustion heat value, little residual liquid after burning, and free of pollution, etc.

Another gasifying device in the invention is shown in Fig.2. Different to the first gasifying device, in the second gasifying device, a commercial one-way inlet valve 3 is connected to the air inlet pipe 1. In addition, the combustible gas can be pumped out from the combustible gas outlet 2 with low suction force. The negative pressure in the gasifying device shown in Fig.2 shall be controlled at 2-8KPa, preferably 5-8KPa, by controlling the air intake rate through the one-way inlet valve 3 and the output rate of combustible gas. The light hydrocarbon fuel container 20 is a horizontal one preferably.

The gasifying device shown in Fig.2 is applicable to internal combustion-engines, such as automotive engines. By connecting the combustible gas outlet to the suction inlet of automotive fuel in above gasifying device with a combustible gas pipe, the combustible gas can be pumped out from the gasifying device shown in Fig.2 under the suction force created during operation of the combustion engine.

Combustion engines with the light hydrocarbon fuel gasifying device shown in Fig.2 as the fuel supply device feature with completeness of combustion, strong explosive power, high performance at normal temperature and low temperature, and quick acceleration rate, etc. In addition, the contents of hydrocarbon, compounds of nitrogen and oxygen, and carbon monoxide in the exhaust gas are reduced greatly, compared to gasoline.

Hereunder the invention is further described in the embodiments; however, those embodiments are explanatory and shall not be deemed as any limitation to the invention.

### Embodiment 1

Add 0.8Kg glycerol, 3Kg sodium chloride and 15g potassium permanganate into 15Kg water, agitate to homogeneous, and then add 1000Kg gas condensate (procured from China East Oil), and agitate again to homogeneous, to obtain the light hydrocarbon fuel described in the invention.

Load some light hydrocarbon fuel into a horizontal cylindrical tank (1.5m diameter, 2m length) shown in Fig.1, till the liquid level is about 1/2 of the tank height. Aerate to the cylindrical tank 10 through the air inlet pipe 1 mounted on the upper surface of the cylindrical tank with an air compressor (1KW, procured from Shanghai Compressor Factory), and control the gage pressure of air in the cylindrical tank at 5-8KPa with a relief valve. Produce combustible gas at the combustible gas outlet at 1.5m distance to the air inlet pipe, and feed the produced combustible gas to a boiler (1T, procured from MIURA (Japan)) through a pipe in about 4cm inner diameter. The combustible gas can burn stably and persistently.

Load some light hydrocarbon fuel to the horizontal rectangular oil tank (40 × 40 × 80cm) of a 4-cylinder combustion engine (cylinder diameter × stroke: 81 × 86.4mm). Mount a one-way inlet valve 3 on the feed port of the oil tank. Make a combustible gas outlet 2 on the upper surface of the oil tank, at about 60cm to the feed port, and make an air-tight connection from the combustible gas outlet to the fuel inlet of the combustion engine with a copper pipe in about 0.4cm inner diameter, to suck the combustible gas with the suction force of the combustion engine. The test result is shown in Fig.1.

### Embodiments 2-8

Through the identical procedures as in embodiment 1, add polyatomic alcohol, water-soluble alkali metal or alkaline-earth metals hydrochlorate, and alkali metals oxy-acid salt oxidant into water to the amounts shown in Table 1, and then add the obtained mixture to 1000Kg light hydrocarbon, and agitate to homogeneous to obtain the homogeneous light hydrocarbon fuel.

Then, gasify the obtained light hydrocarbon fuel in the gasifying device in embodiment 1, and take the gasified light hydrocarbon fuel as the fuel for the boiler and combustion engine in embodiment 1. The test result is as follows:

**Table 1**

| | Embodiment 1 | Embodiment 2 | Embodiment 3 | Embodiment 4 | Embodiment 5 | Embodiment 6 | Embodiment 7 | Embodiment 8 |
|---|---|---|---|---|---|---|---|---|
| Light hydrocarbon (Kg) | | | | | | | | |
| Gas condensate | 1000 | 1000 | 1000 | | | | | 500 |
| Light naphtha 1) | | | | 1000 | 1000 | | | 500 |
| Petroleum ether²⁾ | | | | | | 1000 | 1000 | |
| Water (Kg) | 15 | 20 | 12 | 10 | 15 | 20 | 15 | 15 |
| Polyatomic alcohol (Kg) | | | | | | | | |
| Glycerol | 0.8 | | 0.5 | 0.5 | | | 0.3 | 1 |
| Ethylene glycol | | 1 | | | | 0.5 | 0.4 | |
| Propylene glycol | | | 0.2 | | 0.7 | 0.5 | | |
| Water soluble salt(Kg) | | | | | | | | |
| Sodium chloride | 3 | | | | | 2 | 3 | 3 |
| Potassium chloride | | 5 | 2 | 1 | | | | 2 |
| Barium chloride | | | 3 | | 4 | 3 | 2 | |
| Oxidant (g) | | | | | | | | |
| Potassium permanganate | 15 | | 10 | 10 | | | 15 | 20 |
| Sodium dichromate | | 20 | | | | | | |
| Potassium perchlorate | | | 5 | | 18 | 17 | | |
| Boiler burning performance | Stable | Stable | Stable | Stable | Stable | Stable | Stable | Stable |
| Combustion engine performance | | | | | | | | |
| Startup at normal temperature | 3 successes | 3 successes | 3 successes | 3 successes | 3 successes | 3 successes | 3 successes | 3 successes |
| Startup at low temperature (-10°) | 3 successes | 3 successes | 3 successes | 3 successes | 3 successes | 3 successes | 3 successes | 3 successes |
| Power range | 5-56 | 5-56 | 5-56 | 4-54 | 4-54 | 4-52 | 4-52 | 4-53 |

| | | | | | | | | |
|---|---|---|---|---|---|---|---|---|
| 1) Light naphtha is procured from Shanghai Jinshan Petrochemical Plant. 2) Petroleum ether is procured from China East Sea Oil and Gas Field. | | | | | | | | |

It is seen that the gasification efficiency and stability is greatly improved with the method provided in the invention, by adding water, polyatomic alcohol, water-soluble alkali metal or alkaline-earth metals hydrochlorate, and alkali metals oxy-acid salt oxidant in the light hydrocarbon containing gas condensate, light naphtha, and petroleum ether; the product can be used successfully as a clean energy for large-size boilers and combustion engines.

## Claims

1. A light hydrocarbon fuel, containing 1000 pts.(wt.) C₅-C₆ light hydrocarbon, 0.5-1 pts.(wt.) polyatomic alcohol, 1-5 pts.(wt.) water-soluble alkali metal or alkaline-earth metal hydrochlorate, 10-20 pts.(wt.) water, and 0.01-0.02 pts.(wt.) oxy-acid salt oxidant.

2. The light hydrocarbon fuel as in claim 1, wherein, said light hydrocarbon is gas condensate, petroleum ether, light naphtha, or a mixture thereof.

3. The light hydrocarbon fuel as in claim 1, wherein, said polyatomic alcohol is ethylene glycol, propylene glycol, glyceryl alcohol, or a mixture of thereof.

4. The light hydrocarbon fuel as in claim 1, wherein, said water-soluble alkali metal or alkaline-earth metals hydrochlorate is sodium chloride, potassium chloride, magnesium chloride, calcium chloride, barium chloride, or a mixture thereof.

5. The light hydrocarbon fuel as in claim 1, wherein, said oxidant is any one of alkali metal permanganate, alkali metal dichromate, alkali metal perchlorate, or alkali metal periodate.

6. A light hydrocarbon fuel gasifying method, comprising the following steps:
a) Loading the foresaid light hydrocarbon fuel into a light hydrocarbon gasifying device, which comprises a container, an air intake pipe mounted on the container casing, and a combustible gas outlet, said air inlet pipe being close to the liquid level of the light hydrocarbon;
b) aerating at 5-8KPa air intake gauge pressure and outputting combustible gas from the combustible gas outlet; or
c) connecting an one-way inlet valve to the air inlet, and then pumping combustible gas (containing 15-35% (vol.) hydrocarbon and 65-85% (vol.) air) continuously from the combustible gas outlet on said light hydrocarbon gasifying device.

7. The light hydrocarbon fuel gasifying method as in claim 6, wherein, said container is a cylindrical tank of 0.2-20m diameter and 0.5-10m length.

8. A light hydrocarbon fuel gasifying device, comprising a container and a combustible gas outlet and an air inlet pipe mounted on the container casing; wherein, said air inlet pipe is close to the liquid level of light hydrocarbon.

9. The light hydrocarbon fuel gasifying device as in claim 8, wherein, said container is a cylindrical tank of 0.5-3m diameter and 1-5m length.

10. The light hydrocarbon fuel gasifying device as in claim 8, wherein, said air inlet pipe is connected to a one-way inlet valve.
